# EUROPÄISCHE PATENTANMELDUNG

(11) **EP 1 276 193 A2**
(43) Veröffentlichungstag der Anmeldung: **15.01.2003**
(21) Anmeldenummer: 02015727.7
(22) Anmeldetag: 12.07.2002
(51) Int. Cl.: H02G 1/12

(54) **Stufiges Konfektionieren von Kabeln mit einer mehrlagigen Unmantelung**

(30) Priorität: 13.07.2001 DE 10134087
(71) Anmelder: HA Kabeltechnik, A. Haderlapp, 81673 München (DE)
(72) Erfinder: Haderlapp, Alfred, 81549 München (DE)
(74) Vertreter: Paustian, Othmar, Dr.-Ing

(57) **Zusammenfassung**

Es wird ein Verfahren zum stufigen Konfektionieren von Kabeln mit einer mehrlagigen Ummantelung, insbesondere von Koaxialkabeln, vorgeschlagen, wobei die Ummantelung wenigstens eine Lage eines ersten Typs, die auf ihrer radial inneren Anlagefläche in Kabellängsrichtung verschieblich ist, und wenigstens eine Lage eines zweiten Typs aufweist, die auf ihrer radial inneren Anlagefläche in Kabellängsrichtung unverschieblich. Die Lagen der Ummantelung eines abgelängten Kabelstücks werden einzeln in jeweils einem Stück auf jeweils vorgegebenen Stufenlängen der Reihe nach von radial außen nach radial innen entfernt. Die Lagetypen werden nach unterschiedlichen, an sich bekannten Verfahren entfernt. Es wird auch eine Anordnung zur Durchführung des erfindungsgemäßen Verfahrens vorgeschlagen.

## Beschreibung

Die Erfindung bezieht sich auf ein Verfahren zum stufigen Konfektionieren von Kabeln mit einer mehrlagigen Ummantelung, insbesondere von Koaxialkabeln, wobei die Ummantelung wenigstens eine Lage eines ersten Typs, die auf ihrer radial inneren Anlagefläche in Kabellängsrichtung verschieblich ist, und wenigstens eine Lage eines zweiten Typs aufweist, die auf ihrer radial inneren Anlagefläche in Kabellängsrichtung unverschieblich ist, mit den Schritten: Ablängen eines Kabelstücks vorgegebener Länge und Entfernen der Lagen in mindestens einem Kabelendbereich auf jeweils vorgegebenen Stufenlängen, wobei jede Lage des ersten Typs nach einem ersten Verfahren entfernt wird, bei dem die Lage in einem vorgegebenen Abstand vom Kabelende in Umfangsrichtung vollständig geschlitzt und vom Kabelendbereich heruntergeschoben wird. Ferner bezieht sich die Erfindung auf eine Anordnung zur Durchführung eines solchen Verfahrens.

Bei der Serienfertigung von elektronischen und elektrischen Bauteilen und Geräten werden elektrische Kabel in großer Anzahl benötigt. Um den Einbau der Kabel zu erleichtern, werden diese fertig konfektioniert zugeliefert. D. h. die Kabel sind bei ihrer Anlieferung bereits auf ihre Solllänge geschnitten und auch die Lagen der Ummantelung sind in den Kabelendbereichen stufenförmig jeweils soweit zurückgeschnitten, wie es für den Einbau erforderlich ist. Hierbei müssen die Maße in engen Toleranzen gehalten werden, um die elektrischen Eigenschaften der Kabel nicht oder möglichst wenig zu beeinträchtigen oder um vorgegebene Eigenschaften zu erreichen. Andererseits muß die Konfektionierung aufgrund der großen Stückzahlen schnell erfolgen, um die Kosten akzeptabel zu halten.

Ein Verfahren der eingangs genannten Art ist zum Konfektionieren von Koaxialkabeln mit einer z. B. dreilagigen Ummantelung bekannt. Die dreilagige Ummantelung besteht aus dem die Kabelseele umgebenden Dielektrikum, dem das Dielektrikum umschließenden Außenleiter und der den Außenleiter umgebenden Außenlage bzw. Schutzschicht. Der Außenleiter ist ein Metallleiter, der beispielsweise aus einem Drahtgeflecht bestehen kann, das wiederum in Zinn eingebettet sein kann oder nicht. Der Metallleiter ist gegenüber dem Dielektrikum unverschieblich oder zumindest nur sehr schwer verschieblich.

Zur Konfektionierung werden in Umfangsrichtung vollständig umlaufende Schlitze ausgeführt, wobei zunächst die Außenlage und der Außenleiter gemeinsam im Abstand der für den Außenleiter vorgesehenen Stufenlänge vom Kabelende geschlitzt werden. Durch den Umfangsschlitz im Außenleiter zerfällt ein nichtverzinntes Drahtgeflecht in die einzelnen Fasern, so daß der Außenleiterabschnitt gemeinsam mit dem Außenlagenabschnitt zwischen Kabelende und Schlitz in Kabellängsrichtung vom Dielektrikum heruntergeschoben werden kann. Anschließend wird das Dielektrikum im Abstand seiner vorgegebenen Stufenlänge vom Kabelende in Umfangsrichtung geschlitzt und der abgetrennte Dielektrikumsabschnitt von der Kabelseele heruntergeschoben. Schließlich wird die Außenlage im Abstand der für sie vorgesehenen Stufenlänge vom Kabelende in Umfangsrichtung geschlitzt und der abgetrennte Außenlagenabschnitt vom Außenleiter in Kabellängsrichtung heruntergeschoben.

Nachteilig ist dabei, daß durch das gemeinsame Schneiden von Lagen nicht die für die jeweilige Lage optimalen Werkzeuge eingesetzt und auch die Werkzeuge nicht optimal für jede Lage eingestellt werden können. Daraus ergeben sich relativ große Toleranzbereiche bei den Abmessungen. Da ferner im zweiten Schritt das Dielektrikum geschlitzt wird ist die Gefahr einer Beschädigung der Kabelseele, beispielsweise durch Biegen, Knicken oder Zerkratzen, während des anschließenden Konfektionierens der Außenlage relativ hoch. Darüber hinaus können mit dem vorbekannten Verfahren nur Koaxialkabel mit einem nichtverzinnten Drahtgeflecht als Außenleiter konfektioniert werden, da beispielsweise ein in Zinn eingebettetes Drahtgeflecht durch den Umfangsschlitz nicht zerfällt und somit nicht oder nur mit sehr hohem Kraftaufwand vom Dielektrikum heruntergeschoben werden kann.

Aus der DE 198 01 538 C1 ist es bekannt, zur Entfernung von Außenmänteln, die sich beim Schneiden des Umfangsschlitzes nicht auflösen, vom Kabelende aus einen Längsschlitz und am Ende des Längsschlitzes einen Umfangsschlitz auszuführen. Hierdurch wird der abzutrennende Außenmantelabschnitt vollständig von dem restlichen Kabel gelöst und kann abgestreift werden. Mit diesem bekannten Verfahren werden wie in dem zuvor beschriebenen bekannten Verfahren mehrere Lagen bis einschließlich zum Metallleiter gemeinsam geschlitzt, so daß eine stufige Konfektionierung nicht erreicht wird. Eine einzelne Entfernung jeder Lage für sich mit diesem bekannten Verfahren ist aufgrund der Ausführung eines Längsschlitzes zusätzlich zum Umfangsschlitz zeitaufwendig.

Demgegenüber liegt der Erfindung die Aufgabe zugrunde, ein genaueres und dabei kostengünstiges stufiges Konfektionieren von Kabeln zu ermöglichen, wobei das Konfektionieren jedes Kabels unabhängig von der Ausbildung seiner Ummantelung möglich sein soll.

Erfindungsgemäß wird diese Aufgabe bei einem Verfahren der eingangs genannten Art durch folgende Schritte gelöst: Entfernen der Lagen einzeln in jeweils einem Stück auf der jeweils vorgegebenen Stufenlänge der Reihe nach von radial außen nach radial innen und Entfernen jeder Lage des zweiten Typs nach einem an sich bekannten, zweiten Verfahren, bei dem die Lage auf der zu entfernenden Stufenlänge vom Kabelende aus in Kabellängsrichtung geschlitzt wird, dann an dem dem Kabelende abgewandten Ende des Längsschlitzes in Umfangsrichtung vollständig geschlitzt wird und der längsgeschlitzte Lagenabschnitt vom Kabelendbereich abgestreift wird.

Erfindungsgemäß wird auch eine Anordnung zur Durchführung des Verfahrens vorgeschlagen, mit einer an sich bekannten Ablängvorrichtung, die eine Eintrittsöffnung für das abzulängende Kabel und eine Austrittsöffnung für das abgelängte Kabelstück aufweist, wenigstens einer an sich bekannten Einrichtung zur Durchführung des ersten Verfahrens und wenigstens einer an sich bekannten Einrichtung zur Durchführung des zweiten Verfahrens, die jeweils eine Zugangsöffnung zum Einführen und wieder Herausziehen eines Kabelendbereiches aufweisen, wobei die Ablängvorrichtung und die besagten Einrichtungen in Reihe nebeneinander so angeordnet sind, daß ihre Austrittsöffnung bzw. Zugangsöffnungen quer zur Reihenlängsrichtung derselben Seite zugewandt sind, und mit einem Roboter, der wenigstens einen Greifarm aufweist und zu der Ablängvorrichtung und den besagten Einrichtungen so angeordnet ist, daß er mit dem Greifarm der Austrittsöffnung der Ablängvorrichtung ein abgelängtes Kabelstück entnehmen und den Zugangsöffnungen der Einrichtungen zur Durchführung des ersten bzw. des zweiten Verfahrens zuführen kann.

Durch die erfindungsgemäßen Verfahrensschritte kann für jede Lage das geeignetste Werkzeug zum Einsatz gebracht werden und dieses auch genau auf den jeweiligen Lagentyp eingestellt werden. Auf diese Weise ist es möglich, die Toleranzbereiche der zu erzielenden Sollabmessungen zu verringern und damit die charakteristischen Eigenschaften des konfektionierten Kabelstücks genauer einzuhalten. Jede Lage wird mit dem für sie optimalen Verfahren bzw. mit der entsprechenden Einrichtung zur Durchführung dieses Verfahrens entfernt, so daß zum einen nicht unnötig viele Längsschlitze ausgeführt werden müssen, aber zum anderen jede beliebige Ummantelung stufenförmig entfernt werden kann. Da die Lagen in der Reihenfolge von der radial äußeren Lage zur radial inneren Lage entfernt werden, ist die Kabelseele solang wie möglich vor äußeren Beschädigungen weitestgehend geschützt, so daß entsprechende Beeinträchtigungen in den elektrischen Eigenschaften der Kabel vermieden werden. Aufgrund der lagenweisen Konfektionierung der Kabelendbereiche von radial außen nach radial innen sowie der unterschiedlichen Verfahren zur Entfernung dieser Lagen ist ferner eine einfache Automatisierung der stufigen Konfektionierung möglich, wodurch die Kosten weiter gesenkt werden können. Zudem ist diese Vorgehensweise bei der Konfektionierung unabhängig von der Anzahl der Lagen der Ummantelung und somit sehr flexibel auf unterschiedliche Kabeltypen umstellbar, wodurch sowohl der technische als auch der Arbeitsaufwand verringert wird.

Vorzugsweise wird zunächst ein Kabelendbereich fertig konfektioniert und danach der andere Kabelendbereich fertig konfektioniert. Dieses Verfahren bietet sich vor allem für kurze Kabel an, die in der Nähe eines Kabelendbereiches festgehalten werden, um im anderen Kabelendbereich konfektioniert zu werden.

In einer ebenfalls bevorzugten Ausführungsform wird zunächst eine Lage der Ummantelung in beiden Kabelendbereichen fertig konfektioniert, bevor die nächste radial innere Lage fertig konfektioniert wird. Auf diese Weise können längere Kabelstücke, die in ihrer Mitte gehalten sind, schnell und einfach konfektioniert werden.

Vorteilhafterweise ist bei einer erfindungsgemäßen Anordnung zum stufigen Konfektionieren eines Kabels mit dreilagiger Ummantelung, insbesondere eines Koaxialkabels, mit einer radial außenliegenden und einer radial innenliegenden Lage des ersten Typs und einer dazwischenliegenden Lage des zweiten Typs für jede Lage des ersten Typs eine eigene Einrichtung zur Durchführung des ersten Verfahrens vorhanden und sind die Ablängvorrichtung sowie die Einrichtungen zur Durchführung des ersten bzw. des zweiten Verfahrens in der Reihenfolge des Zugriffs durch den Roboter nebeneinander angeordnet. Da für jede Lage eine eigene Einrichtung zu ihrer Konfektionierung vorgesehen ist, kann diese fest und mit der höchstmöglichen Genauigkeit auf das Material und die abzutrennende Stufenlänge der jeweiligen Lage eingestellt werden. Wenn die Ablängvorrichtung und die Einrichtungen zur Durchführung des ersten bzw. des zweiten Verfahrens in der Reihenfolge ihres Zugriffs durch den Roboter angeordnet sind, sind dessen Verfahrwege möglichst gering gehalten.

In einer bevorzugten Weiterbildung weist eine erfindungsgemäße Anordnung eine Wendeeinrichtung zum Wenden des abgelängten Kabelstücks um 180° um eine senkrecht zur Kabellängsachse verlaufende Achse auf, wobei der Roboter das abgelängte Kabelstück nach dessen Zuführen zu den Einrichtungen zur Durchführung des ersten bzw. des zweiten Verfahrens dann der Wendeeinrichtung und anschließend erneut den Einrichtungen zur Durchführung des ersten bzw. des zweiten Verfahrens zuführen kann. Mit einer solchen Anordnung kann ein Kabelstück auf einfache Weise zunächst in einem Kabelendbereich und danach in dem anderen Kabelendbereich fertig konfektioniert werden.

In weiterer vorteilhafter Ausgestaltung der Erfindung sind die Ablängvorrichtung und die Einrichtungen zur Durchführung des ersten bzw. des zweiten Verfahrens und gegebenenfalls die Wendeeinrichtung im wesentlichen auf einer Kreislinie um den Roboter herum angeordnet und ist der Roboter um eine Achse senkrecht zur Kreisebene drehbar. Mit diesen Maßnahmen werden Translationsverschiebungen des Roboters vermieden. Die reine Kreisbewegung des Roboters verringert den technischen Aufwand bei der Montage des Roboters erheblich.

In einer weiteren bevorzugten Ausführungsform der Erfindung ist gegenüber jeder Einrichtung zur Durchführung des ersten bzw. des zweiten Verfahrens eine weitere Einrichtung zur Durchführung des ersten bzw. zweiten Verfahrens in einem vorgegebenen Abstand so angeordnet, daß sich die Zugangsöffnungen gegenüberliegen, wobei der Roboter das abgelängte Kabelstück einander gegenüberliegenden Einrichtungen unmittelbar nacheinander zuführen kann. Der Abstand zwischen den einander gegenüberliegenden Einrichtungen ist dabei etwas größer als die Länge des abgelängten Kabelstücks. Das abgelängte Kabelstück kann dann zwischen diesen Einrichtungen hindurchgeführt werden, wobei jeweils ein Kabelende einer der gegenüberliegenden Einrichtungen zugewandt ist. Der Roboter muß dann lediglich das abgelängte Kabelstück in dessen Längsrichtung einmal zu der einen Seite und anschließend zu der anderen Seite in die jeweiligen Zugangsöffnungen der Einrichtungen hineinbewegen, um die jeweilige Lage in den beiden Kabelendbereichen nacheinander zu entfernen.

Dabei weist der Roboter bevorzugt zwei Greifarme auf, die jeder das abgelängte Kabelstück nahe einem Kabelendbereich ergreifen können. Auf diese Weise können beliebig lange Kabelstücke konfektioniert werden, da sie nahe ihren Kabelendbereichen gehalten sind, so daß diese einwandfrei den Zugangsöffnungen der jeweiligen Einrichtungen zugeführt werden können.

In günstiger Weiterbildung der Erfindung ist der Roboter zwischen den einander gegenüberliegenden Einrichtungen zur Durchführung des ersten bzw. des zweiten Verfahrens angeordnet. Mit dieser Maßnahme kann der Greifarm bzw. können die Greifarme des Roboters relativ kurz und deren Bewegungsabläufe relativ einfach gehalten werden.

Ganz besonders bevorzugt ist dabei der Roboter in Reihenlängsrichtung verfahrbar. Die für die Greifarme erforderliche Kinematik wird hierdurch weiter vereinfacht.

Die Erfindung wird nachfolgend anhand der Zeichnung beispielshalber noch näher erläutert. Es zeigen:
- Figur 1: in schematischer Darstellung eine Draufsicht auf eine erste Ausführungsform einer erfindungsgemäßen Anordnung;
- Figur 2: in schematischer Darstellung eine Draufsicht auf eine zweite Ausführungsform einer erfindungsgemäßen Anordnung;
- Figur 3: in schematischer Darstellung die Ablängvorrichtung aus Figur 2, mit einem an die Austrittsöffnung anschließenden Austrittsrohr;
- Figur 4: in schematischer Darstellung drei Querschnittsansichten des Austrittsrohrs aus Figur 3 längs Linie IV-IV, in unterschiedlichen Betriebszuständen und
- Figur 5: eine Ansicht eines stufenförmig fertig konfektionierten Kabelstücks.

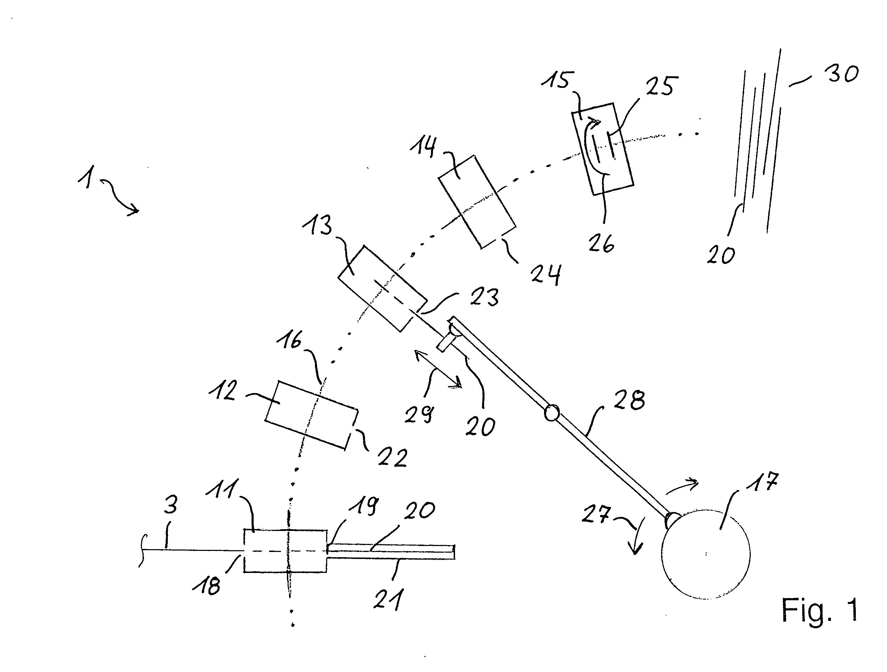

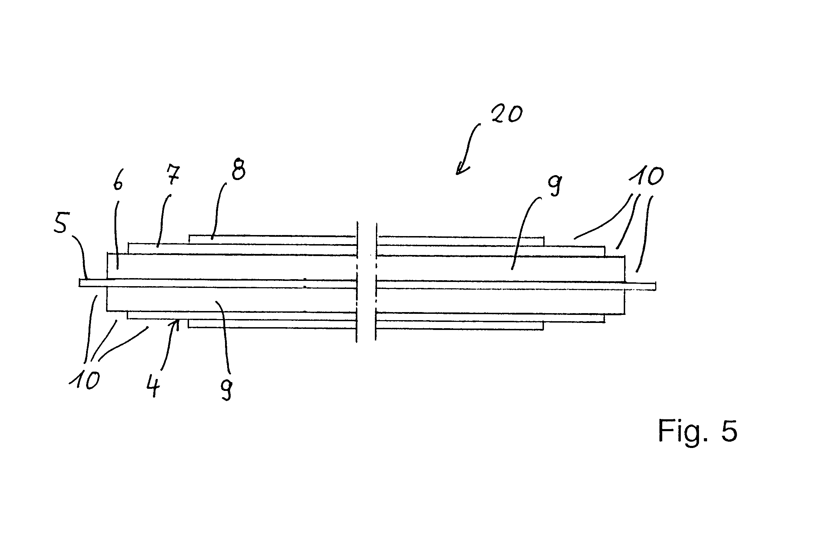

Die in den Figuren 1 bis 4 dargestellten Anordnungen 1, 2 sind zur Konfektionierung von Koaxialkabeln 3 mit einer dreilagigen Ummantelung 4 ausgelegt (Figur 5). Die Ummantelung 4 besteht dabei aus einer die Kabelseele 5 umgebenden ersten Lage, dem Dielektrikum 6. Das Dielektrikum 6 ist auf der Kabelseele 5 ohne weiteres verschiebbar. Es wird von einem Außenleiter 7 aus Metall umschlossen, der auf dem Dielektrikum 6 nicht oder nur mit erheblichem Kraftaufwand in Kabellängsrichtung verschiebbar ist. Der Außenleiter 7 seinerseits wird von einer schützenden Außenlage 8, der dritten Lage, umschlossen, die auf dem Außenleiter 7 in Kabellängsrichtung wieder ohne weiteres verschiebbar ist.

Im fertig konfektionierten Zustand sind in beiden Kabelendbereichen 9 die Außenlage 8, der Außenleiter 7 bzw. der Metallleiter und das Dielektrikum 6 um jeweils vorgegebene Stufenlängen 10 stufenförmig zurückgeschnitten.

Das in Figur 1 dargestellte Ausführungsbeispiel einer erfindungsgemäßen Anordnung 1 weist eine Ablängvorrichtung 11, eine erste Einrichtung 12 zur Durchführung des ersten Verfahrens, eine Einrichtung 13 zur Durchführung des zweiten Verfahrens, eine zweite Einrichtung 14 zur Durchführung des ersten Verfahrens und eine Wendeeinrichtung 15 auf, die alle in etwa auf einer Kreislinie 16 angeordnet sind. In dem Zentrum dieser Kreislinie 16 oder in Nähe dieses Zentrums ist ein Roboter 17 angeordnet.

Die Ablängvorrichtung 11 weist eine Eintrittsöffnung 18 für das abzulängende Kabel 3 und eine Austrittsöffnung 19 auf, aus der das abgelängte Kabelstück 20 austritt. Im Anschluß an die Austrittsöffnung 19 ist noch eine Aufnahmevorrichtung 21 angeordnet, in der das abgelängte Kabelstück 20 zur Entnahme durch den Roboter 17 bereitgehalten wird. Die Einrichtungen 12, 13, 14 zur Durchführung des ersten bzw. des zweiten Verfahrens weisen jeweils eine Zugangsöffnung 22, 23, 24 auf, durch die ein Kabelendbereich 9 des abgelängten Kabelstücks 20 in die jeweilige Einrichtung eingeschoben werden kann, um in der Einrichtung die jeweilige Lage auf der vorgegebenen Stufenlänge zu entfernen. Die erste Einrichtung 12 zur Durchführung des ersten Verfahrens ist zur Entfernung der Außenlage 8 vorgesehen, die Einrichtung 13 zur Durchführung des zweiten Verfahrens ist zur Entfernung des Metallleiters 7 vorgesehen, die zweite Einrichtung 14 zur Durchführung des ersten Verfahrens ist zur Entfernung des Dielektrikums 6 vorgesehen.

Die beiden Einrichtungen 12, 14 zur Durchführung des ersten Verfahrens führen in der Außenlage 8 bzw. im Dielektrikum 6 im Abstand der jeweils vorgegebenen Stufenlänge 10 vom Kabelende einen Umfangsschlitz aus und schieben den jeweils abgetrennten Lagenabschnitt von der radial innenliegenden Anlagefläche in Kabellängsrichtung herunter, d. h. die Außenlage 8 vom Metallleiter 7 und das Dielektrikum 6 von der Kabelseele 5.

In der Einrichtung 13 zur Durchführung des zweiten Verfahrens wird der Metallleiter 7 zunächst auf der vorgegebenen Stufenlänge längs geschlitzt. An dem dem Kabelende abgewandten Ende des Längsschlitzes wird dann ein in Umfangsrichtung vollständig umlaufender Umfangsschlitz ausgeführt, wobei entweder die Schneideinrichtung um das Kabelstück 20 herum geführt oder aber das Kabelstück 20 um seine Längsachse gegenüber der Schneideinrichtung gedreht wird.

Die Wendeeinrichtung 15 weist eine Haltevorrichtung 25 auf, in die das abgelängte Kabelstück 20 von oben eingesetzt werden kann. Die Haltervorrichtung 25 mit dem Kabelstück 20 wird dann um eine Achse senkrecht zu der Kabellängsrichtung um 180° gedreht 26, so daß nach dem Wenden die Orientierung der Enden des abgelängten Kabelstücks 20 ausgetauscht ist.

Die Ablängvorrichtung 11 und die Einrichtungen 12, 13, 14 zur Durchführung des ersten bzw. des zweiten Verfahrens sind in der Reihenfolge ihres Zugriffs durch den Roboter 17 angeordnet. Ihre Austrittsöffnung 19 bzw. Zugangsöffnungen 22, 23, 24 sind alle derselben Seite zugewandt, und zwar dem Zentrum der Kreislinie 16, d. h. dem Roboter 17. Die Wendeeinrichtung 15 ist in dieser Reihenfolge hinter der zweiten Einrichtung 14 zur Durchführung des zweiten Verfahrens auch auf der Kreislinie 16 angeordnet.

Der Roboter 17 ist um eine Achse senkrecht zur Kreisebene drehbar 27, d. h. in Figur 1 um eine Achse senkrecht zur Zeichnungsebene, so daß er durch Drehen nacheinander auf die Ablängvorrichtung 11 und die Einrichtungen 12, 13, 14 zur Durchführung des ersten bzw. des zweiten Verfahrens und die Wendeeinrichtung 15 zugreifen kann. Der Roboter 17 weist einen Greifarm 28 auf, mit dem er das abgelängte Kabelstück 20 greifen kann. Die Größe und die Bewegungsmöglichkeit 29 des Greifarms 28 ist so ausgelegt, daß er das Kabelstück 20 der Ablängvorrichtung 11 entnehmen und den Einrichtungen 12, 13, 14 zur Durchführung des ersten bzw. des zweiten Verfahrens sowie der Wendeeinrichtung 15 zuführen kann.

Im Betrieb entnimmt der Roboter 17 mit seinem Greifarm 28 der Aufnahmevorrichtung 21 der Ablängvorrichtung 11 das abgelängte Kabelstück 20 und führt ein Kabelende in die erste Einrichtung 12 zur Durchführung des ersten Verfahrens ein. Nachdem die Außenlage 8 auf der vorgegebenen Stufenlänge 10 entfernt worden ist, zieht der Greifarm 28 das Kabelende heraus und führt es in die Zugangsöffnung 23 der Einrichtung 13 zur Durchführung des zweiten Verfahrens ein. Nachdem dort der Metallleiter 7 auf seiner vorgegebenen Stufenlänge 10 entfernt worden ist, zieht der Greifarm 28 das Kabelende wieder heraus und führt es in die zweite Einrichtung 14 zur Durchführung des ersten Verfahrens ein. Nachdem dort das Dielektrikum 6 auf seiner vorgegebenen Stufenlänge 10 entfernt worden ist, zieht der Greifarm 28 das Kabelende dort wieder heraus und setzt das abgelängte Kabelstück 20 auf die Haltevorrichtung 25 der Wendeeinrichtung 15, wobei der fertig konfektionierte Kabelendbereich 9 vom Roboter 17 abgewandt ist. Die Wendeeinrichtung 25 dreht nun das abgelängte Kabelstück 20 um 180°, so daß der fertig konfektionierte Kabelendbereich 9 nunmehr dem Roboter 17 zugewandt ist. Der Greifarm 28 entnimmt nun das abgelängte Kabelstück 20 der Haltevorrichtung 25 der Wendeeinrichtung 15 und führt es den Einrichtungen 12, 13, 14 zur Durchführung des ersten bzw. des zweiten Verfahrens in der zuvor beschriebenen Reihenfolge erneut zu, um auch den zweiten Kabelendbereich 9 zu konfektionieren. Nachdem der Greifarm 28 das abgelängte Kabelstück 20 aus der zweiten Einrichtung 14 zur Durchführung des ersten Verfahrens herausgezogen hat, ist das abgelängte Kabelstück 20 fertig konfektioniert. Der Greifarm 28 legt es nun auf einem Sammelplatz 30 oder in einem Sammelbehälter ab.

Während der Bearbeitung der Kabelendbereiche 9 des vom Roboter 17 gehaltenen abgelängten Kabelstücks 20 ist in der Ablängvorrichtung 11 bereits das nächste Kabelstück 20 abgelängt worden. Der Roboter 17 kann daher sofort, nachdem er das fertig konfektionierte Kabelstück 20 abgelegt hat, das nächste abgelängte Kabelstück 20 der Ablängvorrichtung 11 entnehmen. Die Kabel 3 werden auf diese Weise genau, flexibel und schnell stufenförmig konfektioniert.

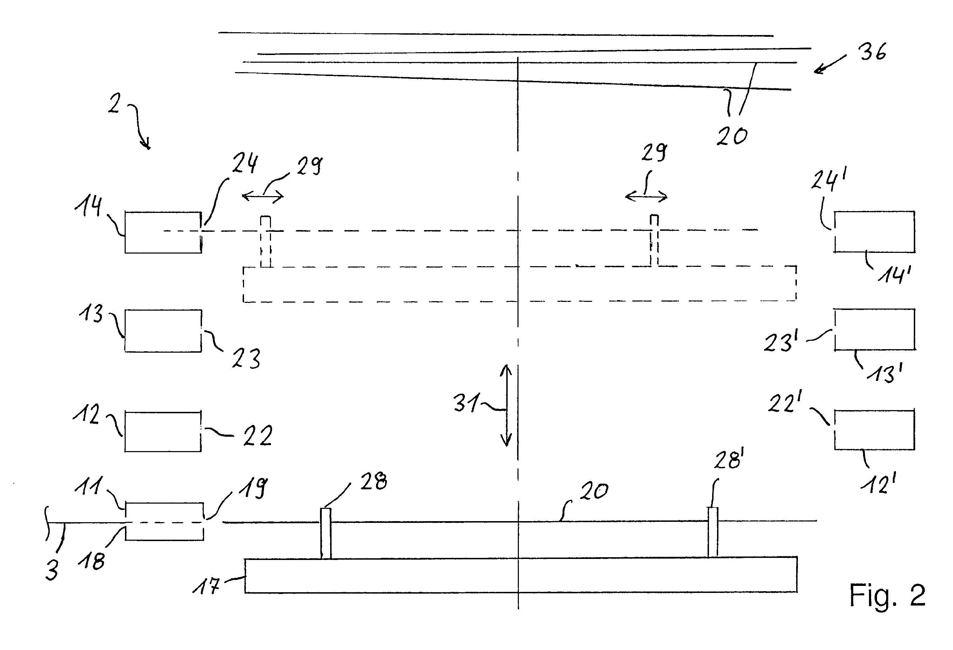

Die in Figur 2 dargestellte Anordnung ist zur Konfektionierung von relativ langen Kabelstücken 20 ausgelegt. Wie bei der Anordnung aus Figur 1 sind in Reihe hintereinander eine Ablängvorrichtung 11, eine erste Einrichtung 12 zur Durchführung des ersten Verfahrens, eine Einrichtung 13 zur Durchführung des zweiten Verfahrens und eine zweite Einrichtung 14 zur Durchführung des ersten Verfahrens angeordnet. Die Ablängvorrichtung 11 und die besagten Einrichtungen 12, 13, 14 sind in einer geraden Reihe hintereinander angeordnet, wobei die Austrittsöffnung 19 bzw. die Zugangsöffnungen 22, 23, 24 quer zur Reihenlängsrichtung derselben Seite zugewandt sind. Gegenüber den besagten Einrichtungen 12, 13, 14 sind jeweils weitere Einrichtungen 12', 13', 14' zur Durchführung des ersten bzw. des zweiten Verfahrens in einer zweiten Reihe angeordnet, wobei die Zugangsöffnungen 22', 23', 24' der Einrichtungen 12', 13', 14' der zweiten Reihe denen der ersten Reihe zugewandt sind. Der Abstand der einander gegenüberliegenden Einrichtungen ist etwas größer als die Länge der zu konfektionierenden Kabelstücke 20.

Zwischen den einander gegenüberliegenden Einrichtungen 12, 12', 13, 13', 14, 14' zur Durchführung des ersten bzw. des zweiten Verfahrens ist ein Roboter 17 angeordnet. Er weist zwei Greifarme 28, 28' auf, die das abgelängte Kabelstück 20 nahe seiner Kabelendbereiche 9 ergreifen und in Kabellängsrichtung zu beiden Seiten hin bewegen können. Der Roboter 17 ist zwischen den einander gegenüberliegenden Einrichtungen in der Längsrichtung deren reihenförmiger Anordnung hin und her verfahrbar 31.

An die Austrittsöffnung 19 der Ablängvorrichtung 11 schließt sich als Aufnahmevorrichtung noch ein Rohr 32 an, in das das abgelängte Kabelstück 20 hineingeschoben wird.

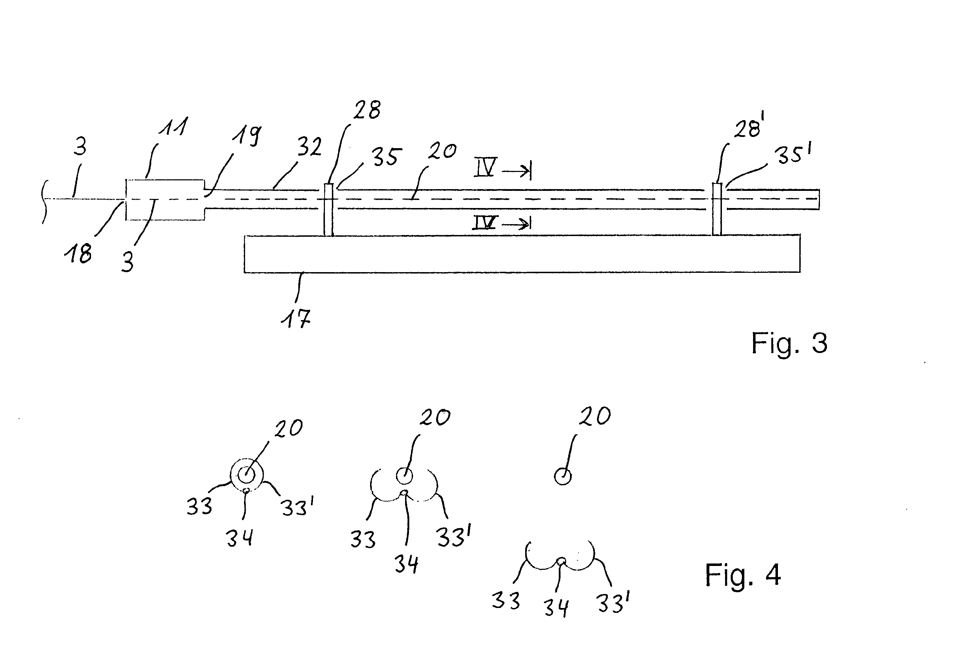

Das Rohr 32 besteht aus zwei Abschnitten 33, 33', die beide in Form eines halben Zylinders ausgebildet und durch ein Scharnier 34 gelenkig miteinander verbunden sind (siehe Figur 4). Wenn das abgelängte Kabelstück 20 aus der Austrittsöffnung 19 der Ablängvorrichtung 11 austritt und in das Rohr 32 eintritt, sind die beiden Rohrabschnitte 33, 33' zu einem geschlossenen Rohr 32 zusammengeklappt, so daß das abgelängte Kabelstück 20 darin sicher geführt und aufgenommen ist. Das Rohr 32 weist in der Nähe der beiden Rohrenden, d. h. der Kabelendbereiche 9 des in dem Rohr 32 befindlichen Kabelstücks 20, jeweils eine Aussparung 35, 35' auf, in die jeweils ein Greifarm 28, 28' des Roboters 17 eingreifen kann, um das abgelängte Kabelstück 20 zu ergreifen. Wenn das abgelängte Kabelstück 20 von den Greifarmen 28, 28' des Roboters 17 sicher gehalten ist, wird das Rohr 22 längs des Scharniers 34 aufgeklappt und vom Kabelstück 20 weg bewegt, z. B. nach unten, um das abgelängte Kabelstück 20 freizugeben.

Der Roboter 17 transportiert das abgelängte Kabelstück 20 zwischen die beiden einander gegenüberliegenden ersten Einrichtungen 12, 12' zur Durchführung des ersten Verfahrens. Ein Ende des abgelängten Kabelstücks wird nun in die Zugangsöffnung 22 der einen Einrichtung 12 eingeführt. Nachdem dort die Außenlage 8 auf der vorgegebenen Stufenlänge 10 entfernt worden ist, wird das andere Ende des Kabelstücks 20 in die gegenüberliegende Einrichtung 12' eingeführt, um in dem anderen Kabelendbereich 9 die Außenlage 8 auf der vorgegebenen Stufenlänge 10 zu entfernen. Danach wird das Kabelstück 20 aus dieser Einrichtung 12' wieder herausgezogen und zwischen die beiden Einrichtungen 13, 13' zur Durchführung des zweiten Verfahrens weitertransportiert. Wie zuvor werden auch hier die beiden Enden nacheinander den beiden gegenüberliegenden Einrichtungen 13, 13' zugeführt, um zunächst in dem einen Kabelendbereich 9 den Außenleiter 7 und danach in dem anderen Kabelendbereich 9 den Außenleiter 7 auf der jeweils vorgegebenen Stufenlänge 10 zu entfernen. Anschließend wird das abgelängte Kabelstück 20 zwischen die beiden zweiten Einrichtungen 14, 14' zur Durchführung des ersten Verfahrens weitertransportiert, um nacheinander in den beiden Kabelendbereichen 9 das Dielektrikum 6 auf der jeweils vorgegebenen Stufenlänge 10 zu entfernen. Nachdem dies in beiden Kabelendbereichen 9 geschehen ist, wird das nun fertig konfektionierte abgelängte Kabelstück 20 auf einem Sammelplatz 36 oder in einem Sammelbehälter abgelegt, der beispielsweise in der Reihe hinter den zweiten Einrichtungen 14, 14' zur Durchführung des ersten Verfahrens angeordnet sein kann.

## Patentansprüche

1. Verfahren zum stufigen Konfektionieren von Kabeln mit einer mehrlagigen Ummantelung, insbesondere von Koaxialkabeln, wobei die Ummantelung wenigstens eine Lage eines ersten Typs, die auf ihrer radial inneren Anlagefläche in Kabellängsrichtung verschieblich ist, und wenigstens eine Lage eines zweiten Typs aufweist, die auf ihrer radial inneren Anlagefläche in Kabellängsrichtung unverschieblich ist, mit den Schritten:
Ablängen eines Kabelstücks vorgegebener Länge und
Entfernen der Lagen in mindestens einem Kabelendbereich auf jeweils vorgegebenen Stufenlängen,
wobei jede Lage des ersten Typs nach einem ersten Verfahren entfernt wird, bei dem die Lage in einem vorgegebenen Abstand vom Kabelende in Umfangsrichtung vollständig geschlitzt und vom Kabelendbereich heruntergeschoben wird,
**gekennzeichnet durch** folgende Schritte:
Entfernen der Lagen (6, 7, 8) einzeln in jeweils einem Stück auf der jeweils vorgegebenen Stufenlänge (10) der Reihe nach von radial außen nach radial innen und
Entfernen jeder Lage (7) des zweiten Typs nach einem an sich bekannten, zweiten Verfahren, bei dem die Lage (7) auf der zu entfernenden Stufenlänge (10) vom Kabelende aus in Kabellängsrichtung geschlitzt wird, dann an dem dem Kabelende abgewandten Ende des Längsschlitzes in Umfangsrichtung vollständig geschlitzt wird und der längsgeschlitzte Lagenabschnitt vom Kabelendbereich (9) abgestreift wird.

2. Verfahren nach Anspruch 1,
**dadurch gekennzeichnet,**
**daß** zunächst ein Kabelendbereich (9) fertig konfektioniert wird und danach der andere Kabelendbereich (9).

3. Verfahren nach Anspruch 1,
**dadurch gekennzeichnet,**
**daß** zunächst eine Lage (6, 7, 8) der Ummantelung in beiden Kabelendbereichen fertig konfektioniert wird und dann die nächste Lage (6, 7, 8).

4. Anordnung zur Durchführung des Verfahrens nach einem der Ansprüche 1 bis 3, mit
einer an sich bekannten Ablängvorrichtung (11), die eine Eintrittsöffnung (18) für das abzulängende Kabel (3) und eine Austrittsöffnung (19) für das abgelängte Kabelstück (20) aufweist, wenigstens einer an sich bekannten Einrichtung (12, 14) zur Durchführung des ersten Verfahrens und wenigstens einer an sich bekannten Einrichtung (13) zur Durchführung des zweiten Verfahrens, die jeweils eine Zugangsöffnung (22, 23, 24) zum Einführen und wieder Herausziehen eines Kabelendbereiches (9) aufweisen,
wobei die Ablängvorrichtung (11) und die besagten Einrichtungen (12, 13, 14) in Reihe nebeneinander so angeordnet sind, daß ihre Austrittsöffnung (19) bzw. Zugangsöffnungen (22, 23, 24) quer zur Reihenlängsrichtung derselben Seite zugewandt sind, und mit
einem Roboter (17), der wenigstens einen Greifarm (28) aufweist und zu der Ablängvorrichtung (11) und den besagten Einrichtungen (12, 13, 14) so angeordnet ist, daß er mit dem Greifarm (28) der Austrittsöffnung (19) der Ablängvorrichtung (11) ein abgelängtes Kabelstück (20) entnehmen und den Zugangsöffnungen (22, 23, 24) der Einrichtungen (12, 13, 14) zur Durchführung des ersten bzw. des zweiten Verfahrens zuführen kann.

5. Anordnung nach Anspruch 4,
zum stufigen Konfektionieren eines Kabels mit dreilagiger Ummantelung, insbesondere eines koaxialen Kabels, mit einer radial außenliegenden und einer radial innenliegenden Lage des ersten Typs und einer dazwischenliegenden Lage des zweiten Typs, **dadurch gekennzeichnet,**
**daß** für jede Lage (6, 8) des ersten Typs eine eigene Einrichtung (14, 12) zur Durchführung des ersten Verfahrens vorhanden ist und die Ablängvorrichtung (11) sowie die Einrichtungen (12, 13, 14) zur Durchführung des ersten bzw. des zweiten Verfahrens in der Reihenfolge des Zugriffs durch den Roboter (17) nebeneinander angeordnet sind.

6. Anordnung nach Anspruch 4 oder 5, insbesondere zur Durchführung des Verfahrens nach Anspruch 2,
**dadurch gekennzeichnet,**
**daß** sie eine Wendeeinrichtung (15) zum Wenden des abgelängten Kabelstücks (20) um 180° um eine senkrecht zur Kabellängsachse verlaufende Achse aufweist, wobei der Roboter (17) das abgelängte Kabelstück (20) nach dessen Zuführen zu den Einrichtungen (12, 13, 14) zur Durchführung des ersten bzw. des zweiten Verfahrens dann der Wendeeinrichtung (15) und anschließend erneut den Einrichtungen (12, 13, 14) zur Durchführung des ersten bzw. des zweiten Verfahrens zuführen kann.

7. Anordnung nach einem der Ansprüche 4 bis 6,
**dadurch gekennzeichnet,**
**daß** die Ablängvorrichtung (11) und die Einrichtungen (12, 13, 14) zur Durchführung des ersten bzw. des zweiten Verfahrens und gegebenenfalls die Wendeeinrichtung (15) im wesentlichen auf einer Kreislinie (16) um den Roboter (17) herum angeordnet sind und der Roboter (17) um eine Achse senkrecht zur Kreisebene drehbar ist.

8. Anordnung nach Anspruch 4 oder 5, insbesondere zur Durchführung des Verfahrens nach Anspruch 3,
**dadurch gekennzeichnet,**
**daß** gegenüber jeder Einrichtung (12, 13, 14) zur Durchführung des ersten bzw. des zweiten Verfahrens eine weitere Einrichtung (12', 13', 14') zur Durchführung des ersten bzw. des zweiten Verfahrens in einem vorgegebenen Abstand so angeordnet ist, daß sich die Zugangsöffnungen (22, 22'; 23, 23'; 24, 24') gegenüberliegen, wobei der Roboter (17) das abgelängte Kabelstück (20) einander gegenüberliegenden Einrichtungen (12, 12'; 13, 13', 14, 14') unmittelbar nacheinander zuführen kann.

9. Anordnung nach Anspruch 8, **dadurch gekennzeichnet, daß** der Roboter (17) zwei Greifarme (28, 28') aufweist, die jeder das abgelängte Kabelstück (20) nahe einem Kabelendbereich (9) greifen können.

10. Anordnung nach Anspruch 8 oder 9, **dadurch gekennzeichnet, daß** der Roboter (17) zwischen den einander gegenüberliegenden Einrichtungen (12, 12'; 13, 13'; 14, 14') zur Durchführung des ersten bzw. des zweiten Verfahrens angeordnet ist.

11. Anordnung nach Anspruch 10, **dadurch gekennzeichnet, daß** der Roboter (17) in Reihenlängsrichtung verfahrbar ist.
